# EUROPÄISCHE PATENTSCHRIFT

(11) **EP 1 133 447 B1**
(45) Veröffentlichungstag und Bekanntmachung des Hinweises auf die Patenterteilung: **21.04.2004**
(21) Anmeldenummer: 99960965.4
(22) Anmeldetag: 09.11.1999
(51) Int. Cl.: C01G 55/00, B01J 35/00

(54) **WASSERLÖSLICHE NANOSTRUKTURIERTE METALLOXID-KOLLOIDE UND VERFAHREN ZU IHRER HERSTELLUNG**
WATER-SOLUBLE NANOSTRUCTURED METAL-OXIDE COLLOIDS AND METHOD FOR PREPARING THE SAME
COLLOIDES D'OXYDE METALLIQUE NANOSTRUCTURES SOLUBLES DANS L'EAU ET PROCEDE PERMETTANT DE LES PRODUIRE

(30) Priorität: 13.11.1998 DE 19852547
(43) Veröffentlichungstag der Anmeldung: 19.09.2001
(73) Patentinhaber: Studiengesellschaft Kohle mbH, 45470 Mülheim (DE)
(72) Erfinder: REETZ, Manfred, T., D-45470 Mülheim/Ruhr (DE); KOCH, Michael, Georg, D-45470 Mülheim/Ruhr (DE)
(74) Vertreter: von Kreisler, Alek, Dipl.-Chem.
(86) Internationale Anmeldenummer: PCT/EP1999/008594
(87) Internationale Veröffentlichungsnummer: WO 2000/029332

(56) Entgegenhaltungen:
- WO-A-96/17685
- HORST WELLER: "Kolloidale Halbleiter-Q-Teilchen : Chemie im übergangsbereich zwischen Festkörper un Molekül" ANGEWANDTE CHEMIE, Bd. 105, Nr. 1, 1993, Seiten 43-55, XP002134514
- N. MOUMEN, M.P. PILENI: "New Synthesis of Cobalt Ferrite Particles in the Range 2-5 nm : Comparison of the Magnetic Properties of the Nanosized Particles in Dispersed Fluid or in Powder Form" CHEMISTRY OF MATERIALS, Bd. 8, Nr. 5, 1996, Seiten 1128-1134, XP002134515
- M.T. REETZ, S.A. QUAISER, M. WINTER, J.A. BECKER, R. SCHÄFER, U. STIMMING, A. MARMANN, R. VOGEL, T. KONNO: "Nanostrukturierte Metalloxidcluster durch Luftoxidation von stabilisierten Metallclustern." ANGEWANDTE CHEMIE, Bd. 108, Nr. 18, 1996, Seiten 2228-2230, XP002134516

## Beschreibung

Die vorliegende Erfindung betrifft mono-, bi- und multimetallische, wasserlösliche Metalloxid-Kolloide, ein Verfahren zu ihrer Darstellung sowie deren Trägerfixierung.

Nanostrukturierte Übergangsmetallkolloide sind von großem Interesse als Katalysatoren für organische Reaktionen, als Elektrokatalysatoren in Brennstoffzellen, sowie als Bausteine in der Materialwissenschaft (G. Schmid, *Clusters and Colloids,* VCH, Weinheim, 1994). In der Literatur findet man zahlreiche chemische und physikalische Darstellungsmethoden für Metallkolloide, wie z. B. die chemische Reduktion von gängigen Metallsalzen wie PdCl₂, Pd(OAc)₂, PtCl₄, RuCl₃, CoCl₂, NiCl₂, FeCl₂ oder AuCl₃ mit einer breiten Palette von Reduktionsmitteln, die photolytische, radiolytische oder thermische Zersetzung bzw. Reduktion geeigneter Metallprecursor oder die Metallverdampfungsmethode. Neuerdings wurden auch elektrochemische Methoden zur Darstellung von Metallkolloiden eingesetzt (M. T. Reetz, S. A. Quaiser, *Angew*. *Chem.* **1995,** *107*, 2956; *Angew*. *Chem., Int. Ed. Engl.* **1995,** *34*, 2728). Um eine unerwünschte Agglomeration der Nanopartikel zu unlöslichen Metallpulvern zu verhindern, werden meist Stabilisatoren wie Liganden, Polymere oder Tenside zugegeben (G. Schmid, *Clusters and Colloids,* VCH, Weinheim, 1994).

Aus ökologischen und ökonomischen Gesichtspunkten sind vor allem wasserlösliche Metallkolloide, deren Synthese möglichst auch im wässrigen Medium durchgeführt werden kann, industriell von großem Interesse. Das Ziel, hochkonzentrierte wasserlösliche tensidstabilisierte Metall-Kolloide herzustellen, wurde nur in wenigen Fällen erreicht; allerdings ist der Reduktionsschritt relativ aufwendig oder erfordert teure Reduktionsmittel wie Borhydride (M. T. Reetz, et al., EP 0672765 A1 sowie H. Bönnemann, et al., DE 4443705 A1).

Des Weiteren sind für bestimmte katalytische Anwendungen häufig bimetallische Nanopartikel den monometallischen Spezies deutlich überlegen, weshalb die gezielte Synthese von bimetallischen Metallkolloiden eine immer größere Bedeutung gewinnt (G. Schmid, *Clusters and Colloids,* VCH, Weinheim, 1994).

Hierbei werden zwei unterschiedliche Metallsalze in organischen Lösungsmitteln in Gegenwart geeigneter Stabilisatoren chemisch oder elektrochemisch co-reduziert, wobei der Grad der Legierungsbildung der Partikel meist von der Differenz der Reduktionspotentiale der zwei verwendeten Metallsalze abhängt. Daher sind nicht alle Kombinationen von Metallen auf diesem Weg möglich. Nachteilig ist auch die Verwendung von organischen Lösungsmitteln und/oder teuren Reduktionsmitteln.

Gerade in wässrigem Medium ist es aufgrund der hohen Polarität und der hohen Oberflächenspannung des Wassers äußerst schwierig, bimetallische Kolloide herzustellen, die einen hohen Grad an Legierungsbildung aufweisen. Eine besondere Herausforderung besteht also darin, auf möglichst einfachem Weg zwei Metalle in wässrigem Medium zu legieren, die ein deutlich unterschiedliches Reduktionspotential besitzen, z. B. ein Edelmetall wie Platin mit einem deutlich unedleren Metall wie Ruthenium, Eisen, Kobalt oder Zinn.

Eine überraschend einfache Lösung dieser Probleme konnte nun dadurch erzielt werden, dass man Metallsalze nicht reduziert, sondern in wässrigem Medium und in Gegenwart eines wasserlöslichen Stabilisators kondensiert, wodurch das entsprechende nanostrukturierte Metalloxid gebildet wird. Der Stabilisator verhindert die unerwünschte Bildung bzw. Abscheidung von unlöslichem Metalloxid in Bulkform. Arbeitet man mit zwei Metallsalzen, so kommt es zu einer Co-Kondensation unter Bildung von wasserlöslichen kolloidalen Bimetalloxiden, wobei auch hier die Größe der Partikel im Nanometerbereich liegt.

Die so erhaltenen wasserlöslichen Metalloxid- oder Bimetalloxid-Kolloide können dann mit geeigneten physikalischen Methoden charakterisiert und zu löslichen oder trägerfixierten Katalysatoren weiterverarbeitet werden. Die Reduktion der kolloidalen Metalloxide erfolgt hierbei mit Reduktionsmitteln wie Wasserstoff, Hypophosphit oder Formiat ohne nennenswerte Veränderung von Stöchiometrie und Teilchengröße der Nanopartikel. Die Methode lässt sich erweitern auf Tri- bzw. Multimetalloxide.

Im Gegensatz zu den entsprechenden Metallkolloiden ist in der Literatur wenig bekannt über Darstellung und Eigenschaften von Metalloxid-Kolloiden der späten Übergangsmetalle. *Henglein* beschreibt die Darstellung von kolloidalem MnO₂ durch Radiolyse von KMnO₄ (C. Lume-Pereira, et al., *J. Phys. Chem.* **1985,** *89,* 5772), *Grätzel* (K. Kalyanasundaram, M. Grätzel, *Angew. Chem*. **1979,** *91,* 759) sowie *Harriman* (P. A. Christensen, et al., *J. Chem*. *Soc., Faraday Trans.* **1984,** *80,* 1451) erhielten Polymer-stabilisierte RuO₂-Kolloide aus RuO₄ bzw. KRuO₄, und *Thomas* berichtete über IrO₂-Kolloide durch Hydrolyse von H₂IrCl₆ in Gegenwart eines Polymers (A. Harriman, et al., *New J. Chem.* **1987,** *11*, 757). Des Weiteren sind Arbeiten von *Nagy* zu nennen, der kolloidale ReO₂-Partikel in Mikroemulsionen durch Reduktion von NaReO₄ mit Hydrazin erhielt (J. B. Nagy, A. Claerbout, in *Surfactants in Solution* (K. L. Mittal, D. O. Shah, Eds.), Plenum Press, New York, **1991,** S. 363; A. Claerbout, J. B. Nagy in *Preparation of Catalysts V* (G. Poncelet, Ed.), Elsevier, Arnsterdam, **1991**, *S.* 705).

Diese kolloidalen Edelmetalloxide sind abzugrenzen von den Arbeiten von *Matijevic*, der Metalloxide von Metallen wie Eisen, Aluminium, Chrom, Titan, Nickel und Cer durch Fällung aus homogener Lösung beschreibt (E. Matijevic, *Langmuir* **1994,** *10,* 8; E. Matijevic, *Langmuir* **1986,** *2,* 12), wobei der Begriff "kolloidal" hier nicht angebracht ist, da die mikrometergroßen Partikel nicht kolloidal in Lösung bleiben. Zu erwähnen sind weiterhin die meist in Mikroemulsionen hergestellten kolloidalen Metalloxide und Metallsulfide wie z. B. CdS und CoFe₂O₄, die in der Halbleitertechnik sowie als magnetische Flüssigkeiten Anwendung finden (M. P. Pileni, *Langmuir* **1997**, *13*, 3266).
Eine weitere Möglichkeit, Metalloxid-Kolloide herzustellen, besteht darin, Metallkolloide nachträglich gezielt zu oxidieren, wie bei elektrochemisch hergestellten Kobalt-Nanopartikeln gezeigt werden konnte (M. T. Reetz, et al., *Angew*. *Chem.* **1996,** *108,* 2228; *Angew. Chem*., *Int. Ed*. *Engl.* **1996**, *35*, 2092), was jedoch nicht in Wasser als Medium möglich ist. Weder dieses noch andere Verfahren sind also geeignet, wasserlösliche Nanopartikel von Metall- oder Bimetalloxiden leicht zugänglich zu machen.

Die neue Methode der kontrollierten Hydrolyse zur Darstellung von kolloidalen Metall- und Bimetalloxiden besitzt u. a. folgende Vorteile:
1) Wasser als kostengünstiges und umweltfreundliches Lösungsmittel.
2) Nahezu vollständiger Umsatz der Metallprecursor zu löslichen Metall- oder Bimetalloxiden (kein Metallverlust).
3) Darstellung von nahezu monodispersen Nanopartikeln im Größenbereich von 0.5 - 5 nm, d. h. hohe Dispersion der Metalle.
4) Einfache Aufreinigung und Isolierung der Kolloidpulver durch Dialyse und Lyophilisation.
5) Einfache Reduktion der Metall- bzw. Bimetalloxide mittels Wasserstoff ohne nennenswerte Veränderung der Stöchiometrie und der Größenverteilung.
6) Vollständige Redispergierbarkeit der Kolloidpulver in Wasser mit Konzentrationen bis zu 0.5 mol Metall pro Liter Wasser.
7) Problemlose Handhabung der Metalloxid-Kolloide an Luft, im Gegensatz zu den entsprechenden Edelmetallkolloiden, die an Luft einer Oberflächenoxidation ausgesetzt sind.
8) Trägerfixierung auf der Stufe der oxidierten Spezies.
9) Steuerung der Stöchiometrie der Bimetalle über einen weiten Bereich.
10) Zahlreiche wasserlösliche Tenside und Polymere als Stabilisatoren einsetzbar.
11) Das Verfahren lässt sich auf die Herstellung von Tri- und Multimetalloxid-Kolloiden erweitern.

Erfindungsgemäß wird die wässrige Lösung oder ggf. Suspension eines Übergangsmetallsalzes oder einer Mischung aus zwei oder mehreren Metallsalzen mit der wässrigen Lösung einer Base in Gegenwart eines wasserlöslichen Stabilisators behandelt. Dies führt zur Hydrolyse der Metallsalze und zur Kondensation bzw. Co-Kondensation unter Bildung von kolloidalen Monometalloxiden oder kolloidalen legierten Mischoxiden.

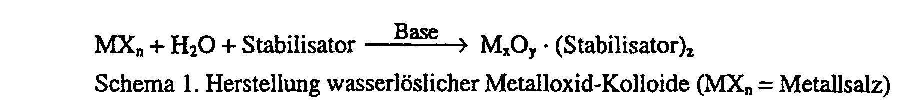

Im Falle der Herstellung von Monometalloxiden kommen als Precursor gängige Salze der Metalle der Gruppen VIb, VIIb, VIII, Ib und IIb des Periodensystems in Frage. Im Falle der Herstellung von kolloidalen Bimetalloxiden (Mischoxiden) werden zwei gängige Salze der Metalle der Gruppen VIb, VIIb, VIII, Ib und/oder IIb des Periodensystems verwendet bzw. co-kondensiert; gleiches ist möglich unter Verwendung eines dieser Salze in Kombination mit dem Salz eines Metalls aus den Hauptgruppen des Periodensystems, wobei insbesondere Salze des Zinns in Frage kommen. Im Falle der Herstellung von kolloidalen Multimetalloxiden werden die entsprechenden Mischungen von drei oder mehreren Metallsalzen gewählt.

Als Basen dienen Carbonate, Hydrogencarbonate, Hydroxide, Phosphate oder Hydrogenphosphate der Alkali- und Erdalkalimetalle wie LiOH, NaOH, KOH, LiHCO₃, NaHCO₃, KHCO₃, CsHCO₃, Li₂CO₃, Na₂CO₃, K₂CO₃, Cs₂CO₃, Mg(OH)₂, MgCO₃, , CaCO₃, Li₃PO₄, Na₂HPO₄, Na₃PO₄ oder K₃PO₄. Bevorzugt werden Li₂CO₃, Na₂CO₃, K₂CO₃, CsCO₃ oder MgCO₃.

Als Stabilisatoren kommen Verbindungen wie amphiphile Betaine, kationische, anionische und nichtionische Tenside oder wasserlösliche Polymere in Frage. Typische Beispiele sind Dimethyldodecylammoniopropansulfonat und Dimethyldodecylammoniopropancarboxylate als amphiphile Betaine, [ClCH₂CH(OH)CH₂N(CH₃)₂C₁₈H₃₇]⁺Cl⁻ als kationisches Tensid, Natrium-Cocoamidoethyl-N-hydroxyethyl-glycinat als anionisches Tensid, Polyoxyethylenlaurylether, Polyoxyethylensorbitanmonolaurat als nichtionische Tenside, sowie Polyvinylpyrrolidon (PVP), Polyethylenglykol (PEG) oder Alkylpolyglycoside als wasserlösliche Polymere. Es ist auch möglich, chirale wasserlösliche Stabilisatoren zu verwenden, so z. B. Poly-L-asparaginsäure-Natriumsalz. Die Hydrolyse bzw. Kondensation der Metallsalze in basischem wässrigen Milieu und in Gegenwart eines Stabilisators wird im Temperaturbereich von 50 °C bis 100 °C durchgeführt. Wasser dient als Lösungsmittel und zugleich als chemischer Reaktionspartner, wobei die Konzentration der wässrigen Lösungen der kolloidalen Metalloxide bis zu 0.5 M bezogen auf Metall betragen kann. Es können jedoch auch Lösungsmittelmischungen bestehend aus Wasser und einem wasserlöslichen organischen Solvens verwendet werden.

Die Teilchengröße der nanostrukturierten Metalloxid-Kolloide bewegt sich in der Regel zwischen 0.5 nm und 5 nm.

Im Falle der Herstellung von Bimetalloxid-Kolloiden bzw. Multimetalloxid-Kolloiden lässt sich das Mengenverhältnis der Metalle im Produkt durch entsprechende Wahl des Mengenverhältnisses der Metallsalze bequem steuern. Die erhaltenen kolloidalen Metalloxide sowie deren Produkte der Wasserstoffreduktion lassen sich mit Hilfe. zahlreicher physikalischer Methoden charakterisieren, darunter HRTEM/EDX, XRD/DFA, XPS, EXAFS und UV-Spektroskopie.

Zur Herstellung heterogener Katalysatoren aus den wasserlöslichen Metall- oder Metalloxid-Kolloiden können bei der Trägerung zahlreiche oxidische und nichtoxidische Feststoffe verwendet werden, z. B. Al₂O₃, SiO₂, CaCO₃, MgO, La₂O₃, Ruß oder Aktivkohle.

Dazu wird eine wässrige Suspension des Trägermaterials mit einer wässrigen Lösung des Metall- oder Metalloxid-Kolloids behandelt, wodurch sich die Nanoteilchen auf dem Trägermaterial absetzen, ohne dass dabei unerwünschte Agglomeration stattfindet. Es ist auch möglich, eine andere Art der Immobilisierung vorzunehmen, z. B. Einschluss in Sol-Gel-Materialien, indem man Si(OCH₃)₄ oder Mischungen von Si(OCH₃)₄ und CₙH₂ₙ₊₁Si(OCH₃)₃ (n = 1-4) in Gegenwart der Metalloxid-Kolloide hydrolysiert. Was die Überführung der Metalloxid-Nanoteilchen in die entsprechenden Metall-Nanoteilchen angeht, so eignen sich die unterschiedlichsten Reduktionsmittel, insbesondere Wasserstoff, Natriumhypophosphit oder Natriumformiat. Die Reduktion ist möglich auf der Stufe der kolloidalen Lösungen der Metalloxide in Wasser oder alternativ nach der Trägerfixierung bzw. Immobilisierung.

Die hier beschriebenen Metall-, Bimetall- oder Multimetalloxid-Kolloide finden Anwendung als Katalysatoren oder Precursor von Katalysatoren für organischchemische Transformationen wie Hydrierungen oder Oxidationen. Die Anwendung als Elektrokatalysatoren in Brennstoffzellen (z. B. Pt/Ru-Bimetalloxide) ist ebenfalls offenkundig und angesichts der geringen Herstellungskosten von besonderer Bedeutung.

### Beispiel 1. PtRuOₓ(3-12-SB)

In einem 250 ml Dreihalskolben wurden 370 mg (5 mmol) Li₂CO₃ eingewogen und in 40 ml deion. Wasser gelöst. Hierzu wurden 40 ml einer 0.1 M Lösung von Dimethyldodecylammoniopropansulfonat (3-12-SB) in deion. Wasser zugegeben. Unter starkem Rühren wurde eine Lösung von 517.9 mg (1 mmol) H₂PtCl₆ · 6 H₂O und 235.9 mg (1 mmol) RuCl₃ · x H₂O in 20 ml deion. Wasser über einen Zeitraum von 1 Stunde bei Raumtemperatur zugetropft. Hierbei sank der pH-Wert der Tensidlösung von ursprünglich 11.5 auf einen Wert von 8.0 nach vollständiger Zugabe der Metallsalzlösung. Die Lösung wurde auf 60 °C temperiert und ca. 20 Stunden lang bei dieser Temperatur gerührt. Das Fortschreiten der Hydrolyse und Kondensation wurde UV-spektroskopisch anhand der Abnahme der H₂PtCl₆-Absorption bei 260 nm verfolgt. Nach vollständigem Verschwinden dieser Bande wurde die Reaktion beendet und auf Raumtemperatur abgekühlt. Die kolloidale Lösung wurde anschließend filtriert, um evtl. vorhandenes, ausgefallenes Metalloxid abzutrennen, und einem Dialyseprozeß unterworfen. Hierbei wurde die kolloidale Metalloxid-Lösung in einen Nadir-Dialyseschlauch gefüllt und zweimal gegen 11 deion. Wasser dialysiert. Die Änderung der Leitfähigkeit des Permeats wurde konduktometrisch verfolgt. Danach wurde nochmals filtriert und die kolloidale Lösung lyophilisiert. Es wurden 1.2 g graues Kolloidpulver erhalten, welches vollständig in Wasser redispergierbar ist.
Metallgehalt: 10.70 % Pt, 5.82 % Ru (entspricht einem Molverhältnis von 0.95 : 1) TEM-Aufnahmen der kolloidalen Metalloxid-Lösung zeigen Partikel mit einer Größenverteilung von 1.5 ± 0.4 nm. Eine EDX-Einzelpartikelanalyse dieser Partikel weist auf einen Bimetallcharakter hin, da stets beide Metalle in einem Molverhältnis zwischen 1 : 2 und 2 : 1 nachgewiesen wurden können. XPS-Untersuchungen an diesen Kolloiden ergaben, daß Ruthenium in der Oxidationsstufe IV vorhanden ist, während das Platin jeweils zur Hälfte in der Oxidationsstufe II und IV im Kolloid eingebaut ist.
Das XRD-Spektrum der im H₂-Strom bei 120 °C reduzierten Probe zeigt eine Streukurve, aus der sich ein mittlerer Paarabstand von 2.73 Å errechnet (Bulk PtRu: 2.71 Å, Bulk Pt: 2.774 Å, Bulk Ru: 2.677 Å) Die mittlere Partikelgröße ergibt sich zu 1.2 nm. Zur DFA-Simulation der Streukurve tragen hauptsächlich M₁₃-Ikosaeder sowie Dekaeder bei, während der Anteil größerer Teichen vom fcc-Typ relativ gering ist.

### Beispiel 2. PtRuOₓ(1-12-CB)

In einem 250 ml Dreihalskolben wurden 370 mg (5 mmol) Li₂CO₃ eingewogen und in 20 ml deion. Wasser gelöst. Hierzu wurden 60 ml einer 0.1 M Lösung von Dimethyldodecylammonioacetat (1-12-CB) in deion. Wasser zugegeben. Unter starkem Rühren wurde eine Lösung von 517.9 mg (1 mmol) H₂PtCl₆ · 6 H₂O und 235.9 mg (1 mmol) RuCl₃ · x H₂O in 20 ml deion. Wasser über einen Zeitraum von 1 Stunde bei Raumtemperatur zugetropft. Hierbei sank der pH-Wert der Tensidlösung von ursprünglich 12.0 auf einen Wert von 8.5 nach vollständiger Zugabe der Metallsalzlösung. Die Lösung wurde auf 60 °C temperiert und ca. 20 Stunden lang bei dieser Temperatur gerührt. Das Fortschreiten der Hydrolyse und Kondensation wurde UV-spektroskopisch anhand der Abnahme der H₂PtCl₆-Absorption bei 260 nm verfolgt. War diese Bande komplett verschwunden, wurde die Reaktion beendet und auf Raumtemperatur abgekühlt. Die kolloidale Lösung wurde anschließend filtriert, um evtl. vorhandenes, ausgefallenes Metalloxid abzutrennen, und einem Dialyseprozeß unterworfen. Hierbei wurde die kolloidale Metalloxid-Lösung in einen Nadir-Dialyseschlauch gefüllt und zweimal gegen 1 l deion. Wasser dialysiert. Die Änderung der Leitfähigkeit des Permeats wurde konduktometrisch verfolgt. Danach wurde nochmals filtriert und die kolloidale Lösung lyophilisiert. Es wurden 1.5 g graues Kolloidpulver erhalten, welches vollständig in Wasser redispergierbar ist.
Metallgehalt: 13.27 % Pt, 4.85 % Ru (entspricht einem Molverhältnis von 1.42 : 1)
TEM: 1.4 nm

### Beispiel 3. PtRuOₓ(PVP)

In einem 250 ml Dreihalskolben wurden 370 mg (5 mmol) Li₂CO₃ sowie 3 g Polyvinylpyrrolidon (PVP) eingewogen und in 80 ml deion. Wasser gelöst. Unter starkem Rühren wurde eine Lösung von 517.9 mg (1 mmol) H₂PtCl₆ · 6 H₂O und 235.9 mg (1 mmol) RuCl₃ · x H₂O in 20 ml deion. Wasser über einen Zeitraum von 1 Stunde bei Raumtemperatur zugetropft. Hierbei sank der pH-Wert der Polymerlösung von ursprünglich 11.5 auf einen Wert von 7.5 nach vollständiger Zugabe der Metallsalzlösung. Die Lösung wurde auf 60 °C temperiert und ca. 20 Stunden lang bei dieser Temperatur gerührt. Das Fortschreiten der Hydrolyse und Kondensation wurde UV-spektroskopisch anhand der Abnahme der H₂PtCl₆-Absorption bei 260 nm verfolgt. War diese Bande komplett verschwunden, wurde die Reaktion beendet und auf Raumtemperatur abgekühlt. Die kolloidale Lösung wurde anschließend filtriert, um evtl. vorhandenes, ausgefallenes Metalloxid abzutrennen, und einem Dialyseprozeß unterworfen. Hierbei wurde die kolloidale Metalloxid-Lösung in einen Nadir-Dialyseschlauch gefüllt und zweimal gegen 1 l deion. Wasser dialysiert. Die Änderung der Leitfähigkeit des Permeats wurde konduktometrisch verfolgt. Danach wurde nochmals filtriert und die kolloidale Lösung lyophilisiert. Es wurden 2.9 g graues Kolloidpulver erhalten, welches vollständig in Wasser, MeOH, EtOH und DMF redispergierbar ist.
Metallgehalt: 6.78 % Pt, 3.15 % Ru (entspricht einem Molverhältnis von 1.11 : 1)
TEM: 1.6 nm

### Beispiel 4. PtRuOₓ(3-12-SB), Pt/Ru = 4/1

In einem 250 ml Dreihalskolben wurden 370 mg (5 mmol) Li₂CO₃ eingewogen und in 40 ml deion. Wasser gelöst. Hierzu wurden 40 ml einer 0.1 M Lösung von Dimethyldodecylammoniopropansulfonat (3-12-SB) in deion. Wasser zugegeben. Unter starkem Rühren wurde eine Lösung von 828.6 mg (1.6 mmol) H₂PtCl₆ · 6 H₂O und 94.4 mg (0.4 mmol) RuCl₃ · x H₂O in 20 ml deion. Wasser über einen Zeitraum von 1 Stunde bei Raumtemperatur zugetropft. Hierbei sank der pH-Wert der Tensidlösung von ursprünglich 11.5 auf einen Wert von 8.0 nach vollständiger Zugabe der Metallsalzlösung. Die Lösung wurde auf 80 °C temperiert und 6 Stunden lang bei dieser Temperatur gerührt, wobei das Fortschreiten der Hydrolyse und Kondensation UV-spektrokopisch anhand der Abnahme der H₂PtCl₆-Absorption bei 260 nm verfolgt wurde. Nach Beendigung der Reaktion wurde die kolloidale Lösung filtriert, um evtl. vorhandenes, ausgefallenes Metalloxid abzutrennen, und einem Dialyseprozeß unterworfen. Hierbei wurde die kolloidale Metalloxid-Lösung in einen Nadir-Dialyseschlauch gefüllt und zweimal gegen 1 deion. Wasser dialysiert. Die Änderung der Leitfähigkeit des Permeats wurde konduktometrisch verfolgt. Danach wurde nochmals filtriert und die kolloidale Lösung lyophilisiert. Es wurden 1.2 g graues Kolloidpulver erhalten, welches vollständig in Wasser redispergierbar ist.
Metallgehalt: 14.87 % Pt, 2.97 % Ru (entspricht einem Molverhältnis von 2.59 : 1)
TEM: 1.5 nm

### Beispiel 5. PtRuOₓ(3-12-SB), Pt/Ru = 1/4

In einem 250 ml Dreihalskolben wurden 370 mg (5 mmol) Li₂CO₃ eingewogen und in 40 ml deion. Wasser gelöst. Hierzu wurden 40 ml einer 0.1 M Lösung von Dimethyldodecylammoniopropansulfonat (3-12-SB) in deion. Wasser zugegeben. Unter starkem Rühren wurde eine Lösung von 207.2 mg (0.4 mmol) H₂PtCl₆ · 6 H₂O und 377.4 mg (1.6 mmol) RuCl₃ · x H₂O in 20 ml deion. Wasser über einen Zeitraum von 1 Stunde bei Raumtemperatur zugetropft. Hierbei sank der pH-Wert der Tensidlösung von ursprünglich 11.5 auf einen Wert von 8.0 nach vollständiger Zugabe der Metallsalzlösung. Die Lösung wurde auf 80 °C temperiert und 6 Stunden lang bei dieser Temperatur gerührt, wobei das Fortschreiten der Hydrolyse und Kondensation UV-spektroskopisch anhand der Abnahme der H₂PtCl₆-Absorption bei 260 nm verfolgt wurde. Nach Beendigung der Reaktion wurde die kolloidale Lösung filtriert, um evtl. vorhandenes, ausgefallenes Metalloxid abzutrennen, und einem Dialyseprozeß unterworfen. Hierbei wurde die kolloidale Metalloxid-Lösung in einen Nadir-Dialyseschlauch gefüllt und zweimal gegen 1 l deion. Wasser dialysiert. Die Änderung der Leitfähigkeit des Permeats wurde konduktometrisch verfolgt. Danach wurde nochmals filtriert und die kolloidale Lösung lyophilisiert. Es wurden 1.2 g graues Kolloidpulver erhalten, welches vollständig in Wasser redispergierbar ist.
Metallgehalt: 9.67 % Pt, 11.27 % Ru (entspricht einem Molverhältnis von 1 : 2.26)
TEM: 1.5 nm

### Beispiel 6. PtO₂(3-12-SB)

In einem 250 ml Dreihalskolben wurden 296 mg (4 mmol) Li₂CO₃ und 674 mg (2 mmol) PtCl₄ eingewogen und in 160 ml deion. Wasser gelöst. Hierzu wurden 40 ml einer 0.1 M Lösung von Dimethyldodecylammoniopropansulfonat (3-12-SB) in deion. Wasser zugegeben. Die Lösung wurde 24 Stunden lang bei 80 °C gerührt, wobei eine Verfärbung der Lösung von gelb-orange nach rotbraun auftritt. Nach Beendigung der Reaktion wurde die kolloidale Platindioxid-Lösung filtriert und anschließend in einem Nadir-Dialyseschlauch zweimal gegen 1.5 l deion. Wasser dialysiert. Die Änderung der Leitfähigkeit des Permeats wurde konduktometrisch verfolgt.

Danach wurde nochmals filtriert und die kolloidale Lösung lyophilisiert. Es wurden 1.3 g graues Kolloidpulver erhalten, welches vollständig in Wasser redispergierbar ist.
Metallgehalt: 22.41 % Pt
TEM: 1.7 nm

### Beispiel 7. PtRuOₓ-Kolloid mit chiralem Tensid als Stabilisator

In einem 250 ml Dreihalskolben wurden 370 mg (5 mmol) Li₂CO₃ eingewogen und in 20 ml deion. Wasser gelöst. Hierzu wurden 60 ml einer 0.1 M Lösung von 3-(N,N-Dimethyldodecylammonio)-2-(*S*)-hydroxybutyrat (3-12-CB*) in deion. Wasser zugegeben. Unter starkem Rühren wurde eine Lösung von 517.9 mg (1 mmol) H₂PtCl₆ · 6 H₂O und 235.9 mg (1 mmol) RuCl₃ · x H₂O in 20 ml deion. Wasser über einen Zeitraum von 1 Stunde bei Raumtemperatur zugetropft. Hierbei sank der pH-Wert der Tensidlösung von ursprünglich 12.0 auf einen Wert von 8.5 nach vollständiger Zugabe der Metallsalzlösung. Die Lösung wurde auf 60 °C temperiert und 26 Stunden lang bei dieser Temperatur gerührt, wobei das Fortschreiten der Hydrolyse und Kondensation UV-spektroskopisch anhand der Abnahme der H₂PtCl₆-Absorption bei 260 nm verfolgt wurde. Nach Beendigung der Reaktion wurde die kolloidale Lösung filtriert, um evtl. vorhandenes, ausgefallenes Metalloxid abzutrennen, und einem Dialyseprozeß unterworfen. Hierbei wurde die kolloidale Metalloxid-Lösung in einen Nadir-Dialyseschlauch gefüllt und zweimal gegen 1 l deion. Wasser dialysiert. Die Änderung der Leitfähigkeit des Permeats wurde konduktometrisch verfolgt. Danach wurde nochmals filtriert und die kolloidale Lösung lyophilisiert. Es wurden 1.5 g graues Kolloidpulver erhalten, welches vollständig in Wasser redispergierbar ist.
Metallgehalt: 6.24 % Pt, 3.92 % Ru (entspricht einem Molverhältnis von 0.82 : 1)
TEM: 1.6 nm

### Beispiel 8. PtRuOₓ-Kolloid mit chiralem Polymer als Stabilisator

In einem 50 ml Zweihalskolben wurden 37 mg (0.5 mmol) Li₂CO₃ sowie 500 mg Poly-L-asparaginsäure Natrium-Salz eingewogen und in 10 ml deion. Wasser gelöst. Unter starkem Rühren wurde eine Lösung von 51.8 mg (0.1 mmol) H₂PtCl₆ · 6 H₂O und 23.6 mg (0.1 mmol) RuCl₃ · x H₂O in 5 ml deion. Wasser über einen Zeitraum von 10 Minuten bei Raumtemperatur zugetropft. Hierbei sank der pH-Wert der Polymerlösung von ursprünglich 11.5 auf einen Wert von 7.5 nach vollständiger Zugabe der Metallsalzlösung. Die Lösung wurde auf 60 °C temperiert und ca. 26 Stunden lang bei dieser Temperatur gerührt. Das Fortschreiten der Hydrolyse und Kondensation wurde UV-spektrokopisch anhand der Abnahme der H₂PtCl₆-Absorption bei 260 nm verfolgt. War diese Bande komplett verschwunden, wurde die Reaktion beendet und auf Raumtemperatur abgekühlt. Die kolloidale Lösung wurde anschließend filtriert, um evtl. vorhandenes, ausgefallenes Metalloxid abzutrennen, und einem Dialyseprozeß unterworfen. Hierbei wurde die kolloidale Metalloxid-Lösung in einen Nadir-Dialyseschlauch gefüllt und zweimal gegen 1 l deion. Wasser dialysiert. Die Änderung der Leitfähigkeit des Permeats wurde konduktometrisch verfolgt. Danach wurde nochmals filtriert und die kolloidale Lösung lyophilisiert. Es wurden 500 mg graues Kolloidpulver erhalten, welches vollständig in Wasser, MeOH, EtOH und DMF redispergierbar ist.
Metallgehalt: 3.78 % Pt, 1.98 % Ru (entspricht einem Molverhältnis von 0.98 : 1)
TEM: 1.6 nm

### Beispiel 9. PtSnOₓ(3-12-SB)

In einem 100 ml Dreihalskolben wurden 74 mg (1 mmol) Li₂CO₃ sowie 103.6 mg (0.2 mmol) H₂PtCl₆ · 6 H₂O eingewogen und in 20 ml einer 0.1 M Lösung von Dimethyldodecylammoniopropansulfonat (3-12-SB) in deion. Wasser gelöst. Unter starkem Rühren wurde eine Lösung von 37.8 mg (0.2 mmol) SnCl₂·2H₂O in 5 ml deion. Wasser über einen Zeitraum von 30 Minuten bei Raumtemperatur zugetropft. Die Lösung wurde auf 70 °C temperiert und 10 Stunden lang bei dieser Temperatur gerührt, wobei das Fortschreiten der Hydrolyse und Kondensation UV-spektroskopisch anhand der Abnahme der H₂PtCl₆-Absorption bei 260 nm verfolgt wurde. Nach Beendigung der Reaktion wurde die kolloidale Lösung filtriert, um von ausgefallenem Metalloxid abzutrennen, und einem Dialyseprozeß unterworfen. Hierbei wurde die kolloidale Metalloxid-Lösung in einen Nadir-Dialyseschlauch gefüllt und zweimal gegen 0.5 l deion. Wasser dialysiert. Die Änderung der Leitfähigkeit des Permeats wurde konduktometrisch verfolgt. Danach wurde nochmals filtriert und die kolloidale Lösung lyophilisiert. Es wurden 0.6 g graues Kolloidpulver erhalten, welches vollständig in Wasser redispergierbar ist.
Metallgehalt: 6.79 % Pt, 2.67 % Sn (entspricht einem Molverhältnis von 1.55 : 1)
TEM: 1.5 nm
EDX-Analyse der Partikel weist auf einen Bimetallcharakter hin.

### Beispiel 10. PtFeOₓ(3-12-SB)

In einem 100 ml Dreihalskolben wurden 74 mg (1 mmol) Li₂CO₃ sowie 103.6 mg (0.2 mmol) H₂ PtCl₆ · 6 H₂O eingewogen und in 20 ml einer 0.1 M Lösung von Dimethyldodecylammoniopropansulfonat (3-12-SB) in deion. Wasser gelöst. Unter starkem Rühren wurde eine Lösung von 39.8 mg (0.2 mmol) FeCl₂ · 4 H₂O in 5 ml deion. Wasser über einen Zeitraum von 30 Minuten bei Raumtemperatur zugetropft. Die Lösung wurde auf 70 °C temperiert und 10 Stunden lang bei dieser Temperatur gerührt, wobei das Fortschreiten der Hydrolyse und Kondensation UV-spektroskopisch anhand der Abnahme der H₂PtCl₆-Absorption bei 260 nm verfolgt wurde. Nach Beendigung der Reaktion wurde die kolloidale Lösung filtriert, um von ausgefallenem Metalloxid abzutrennen, und einem Dialyseprozeß unterworfen. Hierbei wurde die kolloidale Metalloxid-Lösung in einen Nadir-Dialyseschlauch gefüllt und zweimal gegen 0.51 deion. Wasser dialysiert. Die Änderung der Leitfähigkeit des Permeats wurde konduktometrisch verfolgt. Danach wurde nochmals filtriert und die kolloidale Lösung lyophilisiert. Es wurden 0.6 g graues Kolloidpulver erhalten, welches vollständig in Wasser redispergierbar ist.
Metallgehalt: 6.12 % Pt, 1.24 % Fe (entspricht einem Molverhältnis von 1.42 : 1)
TEM: 1.5 nm
EDX-Analyse der Partikel weist auf einen Bimetallcharakter hin.

### Beispiel 11. PtWOₓ(3-12-SB)

In einem 100 ml Dreihalskolben wurden 74 mg (1 mmol) Li₂CO₃ sowie 103.6 mg (0.2 mmol) H₂PtCl₆ · 6 H₂O eingewogen und in 20 ml einer 0.1 M Lösung von Dimethyldodecylammoniopropansulfonat (3-12-SB) in deion. Wasser gelöst. Unter starkem Rühren wurde eine Lösung von 66.0 mg (0.2 mmol) Na₂WO₄ in 5 ml deion. Wasser über einen Zeitraum von 30 Minuten bei Raumtemperatur zugetropft. Die Lösung wurde auf 70 °C temperiert und 10 Stunden lang bei dieser Temperatur gerührt, wobei das Fortschreiten der Hydrolyse und Kondensation UV-spektroskopisch anhand der Abnahme der H₂PtCl₆-Absorption bei 260 nm verfolgt wurde. Nach Beendigung der Reaktion wurde die kolloidale Lösung filtriert, um von ausgefallenem Metalloxid abzutrennen, und einem Dialyseprozeß unterworfen. Hierbei wurde die kolloidale Metalloxid-Lösung in einen Nadir-Dialyseschlauch gefüllt und zweimal gegen 0.5 l deion. Wasser dialysiert. Die Änderung der Leitfähigkeit des Permeats wurde konduktometrisch verfolgt. Danach wurde nochmals filtriert und die kolloidale Lösung lyophilisiert. Es wurden 0.5 g graues Kolloidpulver erhalten, welches vollständig in Wasser redispergierbar ist.
Metallgehalt: 4.61 % Pt, 0.78 % W (entspricht einem Molverhältnis von 5.5 : 1)
TEM: 1.5 nm
EDX-Analyse der Partikel weist auf einen Bimetallcharakter hin.

### Beispiel 12. PtRuWOₓ(3-12-SB)

In einem 250 ml Dreihalskolben wurden 370 mg (5 mmol) Li₂CO₃ eingewogen und in 20 ml deion. Wasser gelöst. Hierzu wurden 60 ml einer 0.1 M Lösung von Dimethyldodecylammoniopropansulfonat (3-12-SB) in deion. Wasser zugegeben. Unter starkem Rühren wurde eine Lösung von 517.9mg (1 mmol) H₂PtCl₆ · 6 H₂O, 141.5 mg (0.6 mmol) RuCl₃ · x H₂O und 66.0 mg (0.2 mmol) Na₂WO₄ in 20 ml deion. Wasser über einen Zeitraum von 3 Stunden bei Raumtemperatur zugetropft. Hierbei sank der pH-Wert der Tensidlösung von ursprünglich 11.4 auf einen Wert von 9.8 nach vollständiger Zugabe der Metallsalzlösung. Die Lösung wurde auf 60 °C temperiert und 22 Stunden lang bei dieser Temperatur gerührt, wobei das Fortschreiten der Hydrolyse und Kondensation UV-spektroskopisch anhand der Abnahme der H₂PtCl₆-Absorption bei 260 nm verfolgt wurde. Nach Beendigung der Reaktion wurde die kolloidale Lösung filtriert und einem Dialyseprozeß unterworfen. Hierbei wurde die kolloidale Metalloxid-Lösung in einen Nadir-Dialyseschlauch gefüllt und zweimal gegen 1 l deion. Wasser dialysiert. Die Änderung der Leitfähigkeit des Permeats wurde konduktometrisch verfolgt. Danach wurde nochmals filtriert und die kolloidale Lösung lyophilisiert. Es wurden 1.8 g graues Kolloidpulver erhalten, welches vollständig in Wasser redispergierbar ist.
Metallgehalt: 8.31 % Pt, 2.91 % Ru, 0.73 % W
TEM: 1.5 nm

### Beispiel 13. Reduktion der kolloidalen Metalloxid-Lösung

1 g des isolierten und aufgereinigten PtRuOₓ(3-12-SB)-Kolloids, dargestellt entsprechend Beispiel 1, wurden in einem Schlenkgefäß unter Schutzgas in 100 ml deion. Wasser gelöst. Nach 30-minütiger Ultraschallbehandlung wurde das Schlenkgefäß kurz anevakuiert, ein mit Wasserstoff gefüllter Gasballon angeschlossen und die Lösung anschließend 24 Stunden bei Raumtemperatur in einer H₂-Atmosphäre gerührt. Die ursprünglich dunkelgrüne bis braune Lösung verfärbt sich in dieser Zeit tiefschwarz. Die kolloidale Lösung kann lyophilisiert werden oder direkt zur Fixierung auf einem Trägermaterial weiterverarbeitet werden.
TEM-Aufnahmen der kolloidalen PtRu-Lösung zeigen Partikel mit einer Größenverteilung von 1.7 ± 0.4 nm. Eine EDX-Einzelpartikelanalyse dieser Partikel weist auf eine nahezu vollständige Legierungsbildung hin.
XPS-Untersuchungen an diesen Kolloiden ergaben, daß sowohl Platin als auch Ruthenium in metallischer Form vorliegen.

### Beispiel 14. Trägerfixierung eines PtRu-Kolloids auf Vulcan

In einem 11 Dreihalskolben wurden 3.552 g Vulcan XC-72R der Firma Cabot eingewogen und in 200 ml Pufferlösung (Citrat-Puffer, 50 mM, pH 4.7) suspendiert. Unter Schutzgas wurden 300 ml einer wässrigen PtRu(3-12-SB)-Lösung (888 mg Edelmetall), hergestellt gemäß der Vorschrift in Beispiel 13, bei 50 °C innerhalb von 3 h zugetropft. Anschließend wurde die Suspension 40 Stunden bei 50 °C und weitere 16 Stunden bei 100 °C gerührt. Nach dem Abkühlen wurde die schwarze Suspension zentrifugiert, die überstehende Lösung abdekantiert, der Katalysator zweimal mit je 200 ml Methanol gewaschen und im
Vakuum bei 40 °C getrocknet.
Metallgehalt: 8.00 % Pt, 4.62 % Ru
Partikelgrößen: ungeträgertes Kolloid: 2.2 ± 0.6 nm
geträgertes Kolloid: 2.3 ± 0.6 nm
HRTEM-Aufnahmen des Katalysators zeigen eine homogene Verteilung der PtRu-Nanopartikel auf dem Träger.

### Beispiel 15. Trägerfixierung eines PtRuOₓ-Kolloids auf Vulcan

In einem 1 l Dreihalskolben wurden 3.552 g des zuvor mit NaOCl-Lösung oberflächenoxidierten Trägers Vulcan XC-72R der Firma Cabot eingewogen und in 200 ml deion. Wasser suspendiert. Danach wurden 300 ml einer wässrigen PtRuOₓ(3-12-SB)-Lösung (888 mg Edelmetall), hergestellt gemäß der Vorschrift im Beispiel 1, bei 60 °C innerhalb von 3 Stunden zugetropft. Anschließend wurde 0.1 M HCl zugetropft, bis die Lösung einen pH-Wert von 2.5 erreicht hat, und die Suspension 40 Stunden bei 50 °C gerührt. Nach dem Abkühlen wurde die schwarze Suspension zentrifugiert, die überstehende Lösung abdekantiert, der Katalysator zweimal mit je 200 ml Methanol gewaschen und im Vakuum bei 40 °C getrocknet.
Metallgehalt: 14.32 % Pt, 8.45 % Ru

### Beispiel 16. Trägerfixierung eines PtRuOₓ-Kolloids auf Aktivkohle

In einem 500 ml Dreihalskolben wurden 5.7 g Aktivkohle eingewogen und in 200 ml deion. Wasser suspendiert. Innerhalb von 1 Stunde wurden 100 ml einer wässrigen PtRuOₓ(3-12-SB)-Lösung (300 mg Edelmetall), dargestellt gemäß der Vorschrift in Beispiel 1, bei 50 °C zugetropft. Anschließend wurde die Suspension 24 Stunden bei 50 °C gerührt. Nach dem Abkühlen und Stehenlassen wurde die überstehende klare Lösung abdekantiert, der Katalysator dreimal mit je 200 ml Methanol gewaschen und im Vakuum bei 40 °C getrocknet.
Metallgehalt: 2.72 % Pt, 1.26 % Ru

### Beispiel 17. Trägerfixierung eines PtRu-Kolloids auf Al₂O₃

In einem 500 ml Dreihalskolben wurden 5.7 g Al₂O₃ eingewogen und in 200 ml deion. Wasser suspendiert. Innerhalb von 1 Stunde wurden unter Schutzgas 100 ml einer wässrigen PtRu(3-12-SB)-Lösung (300 mg Edelmetall), dargestellt gemäß der Vorschrift in Beispiel 13, bei 50 °C zugetropft. Anschließend wurde die Suspension 24 Stunden bei 50 °C gerührt. Nach dem Abkühlen und Stehenlassen wurde der Katalysator abfiltriert, dreimal mit je 200 ml Methanol gewaschen und im Vakuum bei 40 °C getrocknet.
Metallgehalt: 2.91 % Pt, 1.70 % Ru

### Beispiel 18. Trägerfixierung eines PtRuO_{X}-Kolloids auf La₂O₃

In einem 500 ml Dreihalskolben wurden 5.7 g La₂O₃ eingewogen und in 200 ml deion. Wasser suspendiert. Innerhalb von 1 Stunde wurden 100 ml einer wässrigen PtRuOₓ(3-12-SB)-Lösung (300 mg Edelmetall), dargestellt gemäß der Vorschrift in Beispiel 1, bei 50 °C zugetropft. Anschließend wurde die Suspension 24 Stunden bei 50 °C gerührt. Nach dem Abkühlen und Stehenlassen wurde der Katalysator abfiltriert, dreimal mit je 200 ml Methanol gewaschen und im Vakuum bei 40 °C getrocknet.
Metallgehalt: 2.83 % Pt, 1.88 % Ru.

### Beispiel 19. Immobilisierung eines PtRuO_{X}-Kolloids in Sol-Gel-Materialien

In einem 2 ml Polypropylengefäß wurden 1.2 ml (8 mmol) Tetramethoxysilan (TMOS) vorgelegt und 0.5 ml einer wässrigen PtRuOₓ(3-12-SB)-Kolloidlösung (10 mg Edelmetall; 20 g/l), dargestellt gemäß der Vorschrift in Beispiel 1, sowie 50 µl einer 0.1 M NaF-Lösung zupipettiert. Das Gefäß wurde anschließend verschlossen und 10 Sekunden lang auf einem Vortex-Mixer bei Raumtemperatur geschüttelt. Nach eintretender Erwärmung wurde das schwarze Gemisch stehen gelassen, worauf nach ca. 10 Sekunden eine Gelierung der Lösung auftrat. Das Gel wurde nun 24 Stunden in dem verschlossenen Gefäß bei Raumtemperatur einem Alterungsprozess unterworfen und dann 3 Tage bei 37 °C im Trockenschrank getrocknet. Zum Auswaschen des Stabilisators wurde das Gel 3 Tage in 30 ml Ethanol refluxiert, abzentrifugiert, nochmals mit 30 ml Ethanol gewaschen, wiederum abzentrifugiert und schließlich 4 Tage bei 37 °C im Trockenschrank getrocknet. Man erhält 630 mg eines grauen Pulvers.
Metallgehalt: 0.92 % Pt, 0.56 % Ru

### Beispiel 20. Hydrierung von Zimtsäureethylester

In einem Glasreaktor mit Turborührer wurden 250 mg eines PtRuOₓ/Aktivkohle-Katalysators (10 mg Edelmetall), dargestellt entsprechend Beispiel 16, eingewogen. Der Reaktor wurde verschlossen, an einen Thermostaten angeschlossen und auf 25 °C temperiert. Nach mehrmaligem Evakuieren und Argonisieren des Reaktors wurden 60 ml abs. Methanol zugegeben und bei 2000 U/min Rührleistung das Gefäß mehrmals kurz evakuiert und mit Wasserstoff gesättigt. Nach 60-minütigem Rühren in einer H₂-Atmosphäre wurden 2 ml Zimtsäureethylester zugespritzt und die Anfangsaktivität der Hydrierung anhand der zeitlichen Änderung des H₂-Bürettenstands bestimmt.
Aktivität: 150 ml H₂/(g Edelmetall · min). Unter gleichen Bedingungen zeigte der klassische Adams-Katalysator eine geringere Aktivität: 38 ml H₂/(g Edelmetall · min)

## Patentansprüche

1. Wasserlösliche Monometalloxid-Kolloide mit Partikelgrößen im Bereich von 0.5 - 5 nm aus Metallen der Gruppen VIb, VIIb, VIII, Ib oder IIb des Periodensystems, die durch wasserlösliche Additive stabilisiert sind.

2. Wasserlösliche Bi- und Multimetalloxid-Kolloide mit Partikelgrößen im Bereich von 0.5 - 5 nm aus Metallen der Gruppen VIb, VIIb, VIII, Ib, IIb des Periodensystems, die durch wasserlösliche Additive stabilisiert sind.

3. Wasserlösliche Bi- und Multimetalloxid-Kolloide mit Partikelgrößen im Bereich von 0.5 - 5 nm aus einem Hauptgruppenmetall und einem oder mehreren Metallen der Gruppen VIb, VIIb, VIII, Ib, IIb des Periodensystems, die durch wasserlösliche Additive stabilisiert sind.

4. Kolloide nach Anspruch 3, wobei das Hauptgruppenmetall Zinn ist.

5. Kolloide nach Anspüchen 1 bis 4, wobei als wasserlösliche Additive amphiphile Betaine, kationische, anionische oder nichtionische Tenside oder wasserlösliche Polymere benutzt werden.

6. Verfahren zur Herstellung von Additiv-stabilisierten wasserlöslichen mono-, bi- und multimetallischen Metalloxid-Kolloiden mit Partikelgrößen im Bereich von 0.5 - 5 nm gemäß Ansprüchen 1-5, **dadurch gekennzeichnet, dass** Metallsalze oder Mischungen von zwei oder mehreren Metallsalzen in Gegenwart eines Stabilisators in Form des Additivs in basischen wässrigen Lösungen bei Temperaturen von 50°C bis 100°C hydrolysiert oder kondensiert bzw. co-kondensiert werden.

7. Verfahren gemäß Anspruch 6, **dadurch gekennzeichnet, dass** zur Herstellung von wasserlöslichen monometallischen Metalloxid-Kolloiden Salze der Metalle der Gruppen VIb, VIIb, VIII, Ib oder IIb des Periodensystems hydrolysiert bzw. kondensiert werden.

8. Verfahren gemäß Anspruch 6, **dadurch gekennzeichnet, dass** zur Herstellung von wasserlöslichen bi- oder multimetallischen Metalloxid-Kolloiden (Mischmetalloxid-Kolloiden) Mischungen von zwei oder mehreren Salzen der Metalle der Gruppen VIb, VIIb, VIII, Ib und/oder IIb des Periodensystems hydrolysiert bzw. co-kondensiert werden.

9. Verfahren gemäß Anspruch 6, **dadurch gekennzeichnet, dass** zur Herstellung von wasserlöslichen bimetallischen Metalloxid-Kolloiden Mischungen von einem Salz eines Metalls der Gruppen VIb, VIIb, VIII, Ib oder IIb und von einem Salz eines Metalls einer Hauptgruppe des Periodensystems hydrolysiert bzw. co-kondensiert werden.

10. Verfahren gemäß Anspruch 9, wobei das Salz eines Metalls einer Hauptgruppe des Periodensystems SnCl₂ oder SnCl₄ ist.

11. Verfahren gemäß Ansprüche 6 bis 10, wobei als Stabilisator in Form eines Additivs wasserlösliche amphiphile Betaine, kationische, anionische oder nichtionische Tenside oder wasserlösliche Polymere eingesetzt werden.

12. Verfahren gemäß Ansprüche 6 bis 11, wobei als Base ein Carbonat, Hydrogencarbonat, Hydroxid, Phosphat oder Hydrogenphosphat eines Alkali- oder Erdalkalimetalls verwendet wird.

13. Verfahren nach Anspruch 12, wobei als Base Li₂CO₃, Na₂CO₃, K₂CO₃, Cs₂CO₃ oder MgCO₃ verwendet wird.

14. Verfahren gemäß Ansprüche 6 bis 13, **dadurch gekennzeichnet, dass** die Reaktionstemperatur zwischen 50 °C und 90 °C liegt.

15. Verfahren gemäß Ansprüche 6 und 8 bis 14, **dadurch gekennzeichnet, dass** das Mengenverhältnis der Metalle in den bi- oder multimetallischen Metalloxid-Kolloiden durch die entsprechende Wahl des Mengenverhältnisses der Metallsalze gesteuert wird.

16. Verfahren zur Herstellung von wasserlöslichen nanostrukturierten mono-, bi- oder multimetallischen Metall-Kolloiden mit Partikelgrößen von 0.5 nm bis 5 nm, **dadurch gekennzeichnet, dass** die entsprechenden Metalloxid-Kolloide gemäß Ansprüchen 6 bis 15 hergestellt und anschließend reduziert werden.

17. Verfahren gemäß Anspruch 16, wobei als Reduktionsmittel Wasserstoff, Hypophosphit oder Formiat verwendet wird.

18. Verfahren zur Trägerfixierung der gemäß Ansprüche 1 bis 5 hergestellten Metalloxid-Kolloide oder der nach Ansprüchen 16-17 daraus hergestellten Metall-Kolloide, **dadurch gekennzeichnet, dass** feste oxidische oder nichtoxidische Trägermaterialien mit wässrigen Lösungen der Kolloide behandelt werden.

19. Verfahren zur Immobilisierung der gemäß Ansprüche 1 bis 5 hergestellten Metalloxid-Kolloide oder der nach Ansprüchen 16-17 daraus hergestellten Metall-Kolloide, **dadurch gekennzeichnet, dass** sie in Sol-Gel-Materialien eingeschlossen werden.

20. Verfahren gemäß Anspruch 19, wobei Sol-Gel-Materialien verwendet werden, für die als Gel-Precursor Si(OCH₃)₄ oder Mischungen von Si(OCH₃)₄ und CₙH₂ₙ₊₁Si(OCH₃)₃ (n = 1 bis 4) benutzt werden.

## Claims

1. Water-soluble monometal-oxide colloids having particle sizes in the range of 0.5 - 5 nm, made from metals of the groups VIb, VIIb, VIII, Ib or IIb of the periodic table, which are stabilized by water-soluble additives.

2. Water-soluble bi- and multimetal-oxide colloids having particle sizes in the range of 0.5 - 5 nm, made from metals of the groups VIb, VIIb, VIII, Ib, IIb of the periodic table, which are stabilized by water-soluble additives.

3. Water-soluble bi- and multimetal-oxide colloids having particle sizes in the range of 0.5 - 5 nm, made from a metal of the main group and from one or more metals of the groups VIb, VIIb, VIII, Ib, IIb of the periodic table, which are stabilized by water-soluble additives.

4. Colloids according to claim 3, wherein the metal of the main group of the periodic table is tin.

5. Colloids according to claims 1 - 4, wherein amphiphilic betains, cationic, anionic and nonionic surfactants or water-soluble polymers are used as water-soluble additives.

6. A process for producing additive-stabilized, water-soluble, mono-, bi- and multi metallic metal-oxide colloids having particle sizes in the range of 0.5 - 5 nm according to claims 1 to 5, **characterized in that** metal salts or mixtures of two or more metal salts are hydrolyzed or condensed or co-condensed, respectively, in basic aqueous solutions at temperatures from 50 °C to 100 °C in the presence of a stabilizer in form of the additive.

7. The process according to claim 6, **characterized in that** salts of metals of the groups VIb, VIIb, VIII, Ib or IIb of the periodic table are hydrolyzed or condensed, respectively, in order to prepare water-soluble, mono-metallic metal-oxide colloids.

8. The process according to claim 6, **characterized in that** mixtures of two or more salts of metals of the groups VIb, VIIb, VIII, Ib and/or IIb of the periodic table are hydrolyzed or co-condensed, respectively, in order to prepare water-soluble, bi- or multi metallic metal-oxide colloids (mixed metal-oxide colloids).

9. The process according to claim 6, **characterized in that** mixtures of a salt of a metal of the groups VIb, VIIb, VIII, Ib or IIb and of a salt of a metal of a main group of the periodic table are hydrolyzed or co-condensed, respectively, in order to prepare water-soluble, bimetallic metal-oxide colloids.

10. The process according to claim 9, wherein the salt of a metal of a main group of the periodic table is SnCl₂ or SnCl₄.

11. The process according to claims 6 - 10, wherein water-soluble amphiphilic betains, cationic, anionic or nonionic surfactants or water-soluble polymers are used as stabilizer in form of an additive.

12. The process according to claims 6 - 11, wherein a carbonate, hydrogen carbonate, a hydroxide, a phosphate or a hydrogen phosphate of an alkali metal or an alkaline earth metal is used as a base.

13. The process according to claim 12, wherein Li₂CO₃, Na₂CO₃, K₂CO₃, Cs₂CO₃ or MgCO₃ are used as a base.

14. The process according to claims 6 - 13, **characterized in that** the reaction temperature is between 50 and 90 °C.

15. The process according to claims 6 and 8 to 14, **characterized in that** the mass ratio of the metals in the bi- or multi metallic metal-oxide colloids is controlled by the corresponding choice of the mass ratio of the metal salts.

16. The process for preparing water-soluble, nanostructured, mono-, bi- and multi metallic metal colloids having particle sizes of 0,5 nm to 5 nm, **characterized in that** the corresponding metal-oxide colloids can be produced according to the claims 6 to 15 and subsequently be reduced.

17. The process according to claim 16, wherein hydrogen, hypophosphite or formate are used as a reduction agent.

18. The process for carrier fixation of the metal-oxide colloids prepared according to the claims 1 to 5, and of the metal-oxide colloids which are prepared therefrom according to the claims 16 to 17, **characterized in that** solid oxidic or non oxidic carrier materials are treated with aqueous solutions of the colloids.

19. The process for immobilization of the metal-oxide colloids which are prepared according to the claims 1 to 5, and of the metal-oxide colloids which are prepared therefrom according to the claims 16 to 17, **characterized in that** they are incorporated in sol-gel-materials.

20. The process according to claim 19, wherein sol-gel-materials are used, for which Si(OCH₃)₄ or mixtures of Si(OCH₃)₄ and CₙH₂ₙ₊₁Si(OCH₃)₃ (n = 1 to 4) are used as gel precursors.

## Revendications

1. Colloïdes hydrosolubles d'oxyde de métal monométalliques présentant une taille de particules comprise dans la gamme allant de 0,5 à 5 nm obtenus à partir de métaux des groupes VIb, VIIb, VIII, Ib ou IIb de la classification périodique des éléments, qui sont stabilisés par des additifs hydrosolubles.

2. Colloïdes hydrosolubles d'oxyde de métal bimétalliques ou multimétalliques présentant une taille de particules comprise dans la gamme allant de 0,5 à 5 nm obtenus à partir de métaux des groupes VIb, VIIb, VIII, Ib ou IIb de la classification périodique des éléments, qui sont stabilisés par des additifs hydrosolubles.

3. Colloïdes hydrosolubles d'oxyde de métal bimétalliques ou multimétalliques présentant une taille de particules comprise dans la gamme allant de 0,5 à 5 nm obtenus à partir d'un métal d'un groupe principal et d'un ou de plusieurs métaux des groupes VIb, VIIb, VIII, Ib ou IIb de la classification périodique des éléments, qui sont stabilisés par des additifs hydrosolubles.

4. Colloïdes selon la revendication 3, dans lesquels le métal du groupe principal est l'étain.

5. Colloïdes selon les revendications 1 à 4, dans lesquels on utilise en tant qu'additifs hydrosolubles des bétaïnes amphiphiles, des tensioactifs cationiques, anioniques ou non ioniques ou des polymères hydrosolubles.

6. Procédé de préparation de colloïdes hydrosolubles d'oxyde de métal mono-, bi- ou multimétalliques stabilisés par un additif, et présentant une taille de particules comprise dans la gamme allant de 0,5 à 5 nm selon les revendications 1 à 5, **caractérisé en ce que** des sels métalliques ou des mélanges de deux ou plusieurs sels métalliques sont hydrolysés ou condensés ou co-condensés dans des solutions aqueuses basiques, en présence d'un stabilisant sous la forme d'un additif, à des températures comprises entre 50 °C et 100 °C.

7. Procédé selon la revendication 6, **caractérisé en ce que**, pour préparer des colloïdes hydrosolubles d'oxydes de métal monométalliques, on hydrolyse ou on condense des sels des métaux des groupes VIb, VIIb, VIII, Ib ou IIb de la classification périodique des éléments.

8. Procédé selon la revendication 6, **caractérisé en ce que**, pour préparer des colloïdes hydrosolubles d'oxydes de métal bimétalliques ou multimétalliques (colloïdes d'oxyde de métal mixtes), on hydrolyse ou on co-condense des mélanges de deux ou plusieurs sels des métaux des groupes VIb, VIIb, VIII, Ib et/ou IIb de la classification périodique des éléments.

9. Procédé selon la revendication 6, **caractérisé en ce que**, pour préparer des colloïdes hydrosolubles d'oxydes de métal bimétalliques, on hydrolyse ou on co-condense des mélanges d'un sel d'un métal des groupes VIb, VIIb, VIII, Ib ou IIb et d'un sel d'un métal d'un groupe principal de la classification périodique des éléments.

10. Procédé selon la revendication 9, dans lequel le sel d'un métal d'un groupe principal de la classification périodique des éléments est SnCl₂ ou SnCl₄.

11. Procédé selon les revendications 6 à 10, dans lequel on utilise comme stabilisant sous la forme d'un additif des bétaïnes amphiphiles hydrosolubles, des tensioactifs cationiques, anioniques ou non ioniques ou des polymères hydrosolubles.

12. Procédé selon les revendications 6 à 11, dans lequel on utilise comme base un carbonate, un hydrogénocarbonate, un hydroxyde, un phosphate ou un hydrogénophosphate d'un métal alcalin ou alcalino-terreux.

13. Procédé selon la revendication 12, dans lequel on utilise comme base Li₂CO₃, Na₂CO₃, K₂CO₃, Cs₂CO₃ ou MgCO₃.

14. Procédé selon les revendications 6 à 13, **caractérisé en ce que** la température réactionnelle est comprise entre 50 °C et 90 °C.

15. Procédé selon les revendications 6 et 8 à 14, **caractérisé en ce que** le rapport de quantité des métaux dans les colloïdes d'oxydes de métal bi- ou multimétalliques est commandé par la sélection correspondante du rapport de quantité des sels métalliques.

16. Procédé de préparation de colloïdes métalliques hydrosolubles mono-, bi- ou multimétalliques nanostructurés présentant une taille de particules comprise dans la gamme allant de 0,5 à 5 nm, **caractérisé en ce que** les colloïdes d'oxyde métallique correspondants sont préparés selon les revendications 6 à 15, puis réduits.

17. Procédé selon la revendication 16, dans lequel on utilise comme agent réducteur de l'hydrogène, de l'hypophosphite ou du formiate.

18. Procédé de fixation sur un support des colloïdes d'oxyde métallique préparés selon les revendications 1 à 5 ou des colloïdes métalliques préparés selon les revendications 16-17, **caractérisé en ce que** l'on traite des matériaux de support solides oxydiques ou non oxydiques avec des solutions aqueuses des colloïdes.

19. Procédé d'immobilisation des colloïdes d'oxyde métallique préparés selon les revendications 1 à 5 ou des colloïdes métalliques préparés selon les revendications 16-17, **caractérisé en ce qu'**ils sont inclus dans des matériaux sol-gel.

20. Procédé selon la revendication 19, dans lequel on utilise des matériaux sol-gel pour lesquels on utilise en tant que précurseur de gel Si(OCH₃)₄ ou des mélanges de Si(OCH₃)₄ et de CₙH₂ₙ₊₁Si(OCH₃)₃ (n = 1 à 4).
